# EUROPÄISCHE PATENTSCHRIFT

(11) **EP 1 958 500 B1**
(45) Veröffentlichungstag und Bekanntmachung des Hinweises auf die Patenterteilung: **26.05.2010**
(21) Anmeldenummer: 08002453.2
(22) Anmeldetag: 11.02.2008
(51) Int. Cl.: A01G 27/06

(54) **Vorrichtung zur Bewässerung von Bepflanzungen in Behältnissen**
Device for watering plants in containers
Dispositif d'irrigation de plantations dans des récipients

(30) Priorität: 14.02.2007 DE 102007007207; 28.06.2007 DE 102007029975
(43) Veröffentlichungstag der Anmeldung: 20.08.2008
(73) Patentinhaber: Höpke, Gerhard, 27232 Sulingen (DE)
(72) Erfinder: Höpke, Gerhard, 27232 Sulingen (DE)
(74) Vertreter: König, Norbert

(56) Entgegenhaltungen:
- EP-A- 1 479 289
- WO-A-99/60841
- DE-B- 1 030 096
- DE-B1- 1 582 761

## Beschreibung

Die Erfindung betrifft eine Vorrichtung zur Bewässerung von Bepflanzungen in Behältnissen gemäß Oberbegriff des Anspruchs 1.

Es sind derartige Vorrichtungen bekannt, beispielsweise von den Firmen Gardena oder Blumat, bei denen entweder ein reduzierter Wasserleitungsdruck oder Wasserdruck aufgrund eines deutlich höher gelegenen Vorratsbehälters erforderlich ist oder bei Zimmerpflanzen zumindest ein zur Bepflanzung etwa gleich hoher Wasserspiegel in einem Vorratsbehälter einzustellen ist. Auf Friedhöfen und ähnlichen Einrichtungen sind diese Voraussetzungen jedoch nicht gegeben, so dass ein Einsatz dieser Vorrichtungen dort nicht möglich ist, da dort sinnvollerweise nur ein nicht sichtbarer Wasser-Vorratsbehälter unter der Bepflanzung einzusetzen ist.

Die Aufgabe der vorliegenden Erfindung besteht darin, eine Vorrichtung zur Bewässerung von Bepflanzungen in Behältnissen anzugeben, die auch für Friedhöfe oder ähnliche Einrichtungen geeignet ist und die Pflanzen vom Frühling bis zum Herbst, vor allem bei hochsommerlichen Temperaturen mit nur einer Füllung über einen Zeitraum von mehreren Wochen aus einem nicht sichtbaren Vorratsbehälter mit der erforderlichen Menge Wasser versorgen.

Aus der DE 1582761 ist eine selbsttätige Einrichtung zur Bewässerung von Kulturpflanzen mit einem in das die Pflanzen umgebende Erdreich einsteckbaren Flüssigkeitsverteiler und einem damit durch eine rohr- oder schlauchförmige Leitung verbundenen Vorratsbehälter bekannt. Der Flüssigkeitsspiegel des Vorratsbehälters liegt unterhalb des Flüssigkeitsspiegels in dem als geschlossener Hohlkörper ausgebildeten Flüssigkeitsverteiler. Der Flüssigkeitsverteiler weist nur in seinem von Erde umgebenen Teil luftdurchlässige Wandbereiche auf. Die luftdurchlässigen Wandbereiche weisen lediglich poröse Öffnungen auf. Der nicht mit Flüssigkeit gefüllte und von Erde umgebene Teil des Flüssigkeitsverteilers ist glasiert und somit luftundurchlässig. Der Flüssigkeitsverteiler wird durch einen Hohlkegel aus Ton gebildet.

Durch die WO 99/60841 ist ein Behälter für Blumen und Pflanzen bekannt, dessen Seiten und Boden doppelwandig ausgebildet sind. In dem durch die Doppelwandungen eingeschlossenen Raum ist ein Wasserspeicher vorgesehen, aus dessen Bodenbereich ein Schlauch nach oben zu einem in das Erdreich eingesteckten Flüssigkeitsverteiler geführt ist.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die erfindungsgemäße Ausbildung ermöglicht, den Wasserspiegel des Vorratsbehälters deutlich tiefer als die Bepflanzung zu legen, so dass aus einem unter der Bepflanzung liegenden Vorratsbehälter einwandfrei eine Versorgung mit den erforderlichen Wassermengen erreichbar ist. Dies ist bei den bekannten Vorrichtungen nicht erreichbar, bei denen ausdrücklich vor einem zu niedrigen Wasserspiegel gewarnt wird, weil dann die Wassersäule abreißt und kein Wasser mehr angesaugt werden kann.

Die Erfindung soll nachfolgend anhand der beigefügten Zeichnung, in der ein Ausführungsbeispiel dargestellt ist, näher erläutert werden.

Es zeigt:
- Fig. 1: schematisch eine erfindungsgemäße Vorrichtung zur Bewässerung von in Behältnissen eingepflanzten Pflanzen,
- Fig. 2: ein Detail A der Vorrichtung nach Fig. 1 in vergrößerter und auseinander gezogener Darstellung und
- Fig. 3: eine weitere Ausführungsform der Vorrichtung nach Fig. 1.

Gleiche und einander entsprechende Bauteile sind in den Figuren der Zeichnung mit den gleichen Bezugszeichen versehen.

Die Zeichnung zeigt eine Vorrichtung zur Bewässerung von Bepflanzungen in Behältnissen mit einem Gefäß 1, das aus einem geschlossenen Vorratsbehälter 2 für Wasser und einem Vorratsbehälter-Aufsatz 3 für Pflanzerde und Pflanzen besteht. Der Aufsatz 3 weist einen Rand 4 mit einem unteren mit Löchern ausgestatteten Umfangsrandbereich 5 und einem oberen geschlossenen Umfangsrandbereich 6 auf.

Es ist wenigstens ein aus dem Vorratsbehälter 2 nach oben aus dem Aufsatz 3 herausgeführter Saugschlauch 8 vorgesehen, dessen nach oben herausgeführtes Ende 10 mit einem in die Pflanzerde einsteckbaren Flüssigkeitsverteiler 12 verbindbar ist.

Der Wasservorratsbehälter 2 weist eine zum Rand hin abfallende Oberseite 14 auf. Hierdurch ist gewährleistet, dass bei Regenwetter überschüssiges Wasser aus dem darüber liegenden Pflanzbereich seitlich ablaufen kann (Ablauf 17).

Die Lochung des Umfangrandbereiches 5 schützt die Bepflanzung vor Nagetieren. Der obere geschlossen ausgebildete Umfangsrandbereich 6 verhindert ein Abziehen des zur Versorgung der Pflanzen angesaugten Wassers in den Außenbereich.

Der Vorratsbehälter 2 weist einen gewölbten Boden 16 auf.

Die Außenwand 18 des Vorratsbehälters 2 ist sich auswärts nach oben erweiternd ausgebildet, so dass sich bei Frost gefrierendes Restwasser ausdehnen kann.

Das Gefäß 1 weist einen Wasser-Einfüllstutzen 20 mit einem aus dem Aufsatz 3 nach oben herausragenden Teil 46 auf, der im oberen Bereich mit einem Gewinde 21 versehen ist und auf den eine Blindkappe 22 aufschraubbar ist.

Die Blindkappe 22 weist einen zentral angeordneten Füllstandsmessstab 24 zur Kontrolle des Wasser-Füllstands auf. Anstelle eines Füllstandsmessstabs 24 kann auch eine elektromechanische Wasser-Füllstandsanzeige (nicht dargestellt) eingesetzt werden.

Der Einfüllstutzen 20 ist oberhalb des Aufsatzes 3 außenseitig mit einem vorzugsweise angeformten Stützwulst 26 versehen, auf dem eine erste, vom Einfüllstutzen durchragte Kappe 28 aufliegt, die wiederum von einer zweiten, vom Einfüllstützen 20 durchsetzten Kappe 30 überlagert ist. Der Durchmesser der zweiten Kappe 30 ist größer als der Durchmesser der ersten Kappe 28. Die zweite Kappe 30 ist unter Zwischenschaltung eines Dichtungsringes 32 von der Blindkappe 22 gegen die erste Kappe 28 schraubbar.

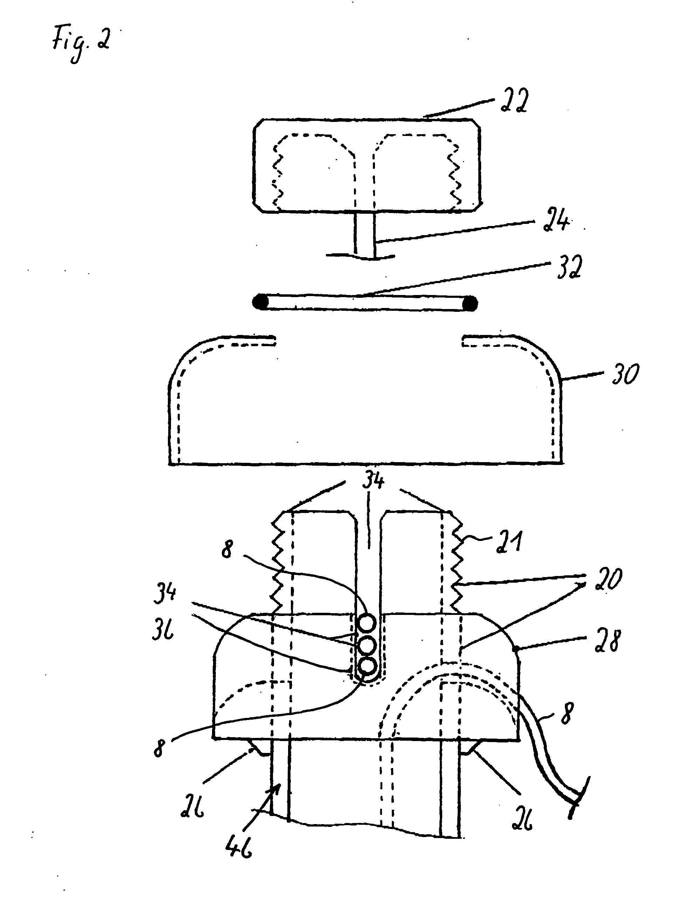

Der aus dem Aufsatz 3 herausragende Teil 46 des Einfüllstutzens 20 und die erste Kappe 28 sind jeweils mit wenigstens einem Schlitz 34, 36 ausgestattet. Die Schlitze im Einfüllstutzen 20 und in der Kappe 28 sind miteinander ausgerichtet. Durch die Schlitze 34, 36 sind die Saugschläuche 8 hindurchgeführt, die von der zweiten Kappe 30 nach Art einer Glocke überdeckt sind, um den Eintritt von Erde neben den Saugschläuchen in den Einfüllstutzen 20 und damit in den Vorratsbehälter 2 zu verhindern. In der Fig. 2 der Zeichnung sind drei Saugschläuche 8 von einem Schlitzpaar 34, 36 aufgenommen.

Das Gefäß 1 weist unterhalb des unteren Endes des Einfüllstützens 20 im Boden eine Auswölbung 38 auf, die von einem Gitter 40 abgedeckt ist. Hierdurch wird erreicht, dass eventuell doch in den Vorratsbehälter hineinfallende Erde durch das Gitter hindurch fällt und nicht die Saugschläuche 8 verstopfen kann. Das Gitter 40 besteht vorzugsweise aus einem flexiblen Stahldrahtgeflecht das zum Einbringen in den Behälter aufrollbar ist und sich danach wieder entspannt.

Die Saugschläuche 8 sind an ihrem unteren Ende mit Gewichten 42 versehen, die vorzugsweise an beiden Enden spitz zulaufen, um ein einwandfreies Hinablassen und Wiederrausziehen über den Einfüllstutzen 20 zu ermöglichen.

Der Flüssigkeitsverteiler 12 besteht aus einem geschlossenen Hohlkörper mit einem unteren, in die Pflanzerde einsteckbaren Teil 50 und einem oberen, auf dem unteren Teil 50 angeordneten Teil 52.

Der untere Teil 50 besteht aus einem porösen Material, vorzugsweise aus einem Hohlkegel aus Ton. Er ist somit luftdurchlässig.

Der obere Teil 52 besteht aus einem luftundurchlässigen Material. Er kann als auf den Ton-Hohlkegel 50 aufgesetzter, luftundurchlässiger Aufsatz oder als luftundurchlässige, zylindrische Fortsetzung des Ton-Hohlkegels ausgebildet sein. Auf den Aufsatz oder auf die Fortsetzung des Ton-Hohlkegels ist ein Verschlussmittel 54, bspw. eine Kappe, ein Deckel, Pfropfen o. dgl., luftdicht anbringbar, durch das der Saugschlauch 8 luftdicht abgedichtet hindurchgeführt ist. Der Saugschlauch 8 mündet im oberen Teil 52.

Zum Betrieb der Bewässerungsvorrichtung muss zunächst der Ton-Hohlkegel 50 mit Wasser bis zur vollständigen Sättigung getränkt werden. Hierzu wird der Ton-Hohlkegel 50 für ca. 10 Minuten in eine mit Wasser gefüllte Schale gelegt. Danach muss der Saugschlauch 8 mit Wasser voll gesaugt werden. Anschließend wird der Ton-Hohlkegel 50 in der Schale unter Wasser mit dem Verschlussmittel 54 so verschlossen, dass der Ton-Hohlkegel 50 und der Saugschlauch 8 absolut luftblasenfrei sind. Luftblasen können einen Abriss der Wassersäule im Saugschlauch 8 bewirken. Der so vorbereitete Flüssigkeitsverteiler 12 wird dann in das Erdreich des Vorratsbehälter-Aufsatzes 3 eingesetzt.

Durch die poröse Wandung des Ton-Hohlkegels 50 tritt infolge des Kapillareffektes Flüssigkeit aus dem Ton-Hohlkegel nach außen in das Erdreich, wodurch sich im Inneren des Flüssigkeitsverteilers 12 ein Unterdruck aufbaut, der ab einer bestimmten Höhe zu einem Ansaugen von Flüssigkeit aus dem Vorratsbehälter 2 über die Saugleitung 8 und somit zu einem Flüssigkeitstransport aus dem Vorratsbehälter in den Flüssigkeitsverteiler 12 führt. Sobald sich zwischen den Kapillarkräften und dem Unterdruck ein Gleichgewicht eingestellt hat, tritt gleichviel Flüssigkeit in den Flüssigkeitsverteiler ein und aus - in Abhängigkeit von der aus dem Erdreich verdunsteten und von den Pflanzen aufgenommenen Flüssigkeitsmenge.

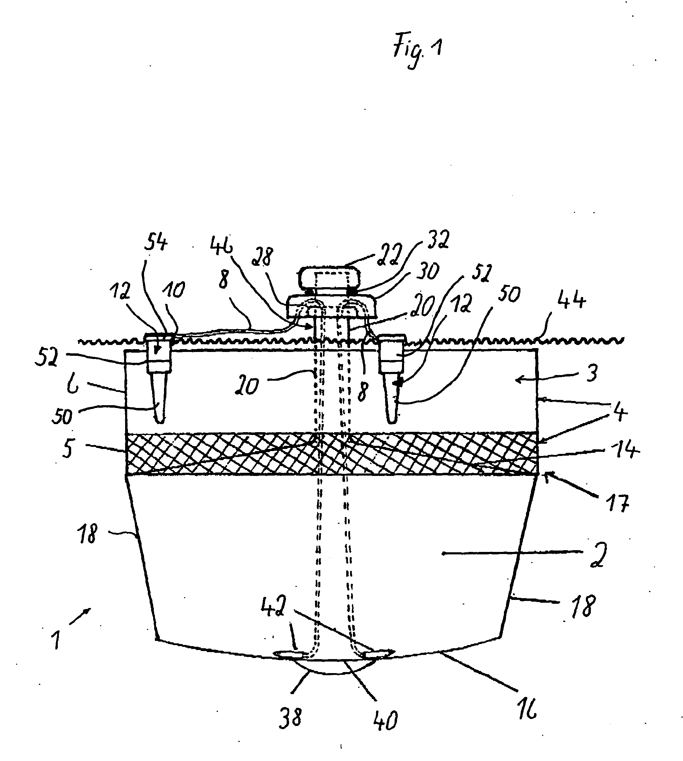

Die erfindungsgemäße Vorrichtung kann in den Erdboden so eingesetzt werden, dass die Oberseite des Aufsatzes 3 mit dem Bodenniveau 44 (vgl. Fig. 1) abschließt oder geringfügig darunter angeordnet ist, so dass im Wesentlichen nur der den Aufsatz überragende Teil 46 des Einfüllstutzens 20 mit den Kappen 22, 28, 30 das Bodenniveau 44 überragt, wobei das Teil 46 kaum sichtbar innerhalb der Bepflanzung angeordnet werden kann.

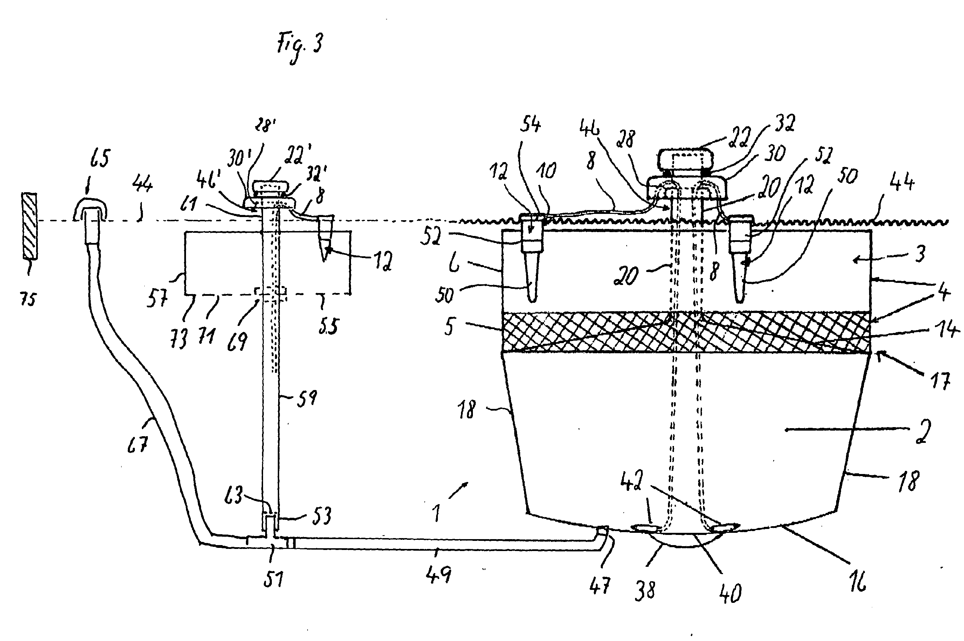

In der Fig. 3 ist eine modifizierte Ausführung der Vorrichtung nach Fig. 1 dargestellt, bei der ein Schlauchanschluss 47 im Boden 16 des Wasservorratsbehälters 2 ausgebildet ist. An diesen Schlauchanschluss 47 ist wenigstens ein Schlauch 49 angeschlossen, der über ein oder mehrere Verbindungsstücke 51 mit einem unteren Ende 53 wenigstens eines einen Boden 55 wenigstens einer einfachen Pflanzschale 57 abgedichtet durchsetzenden Rohres 59 verbunden ist. Das Rohr 59 besteht vorzugsweise aus PVC und ist am oberen Ende 61 entsprechend der Ausführungsform nach Fig. 1 zur Anbringung der Saugschläuche 8 ausgebildet. Der aus der Pflanzschale 57 herausragende Teil 46' des Rohres 59 ist mit einer aufschraubbaren Blindkappe 22' versehen. Das Rohr 59 ist oberhalb der Pflanzschale 57 mit einem Stützwulst ausgestattet, auf dem eine erste vom Rohr durchragte Kappe 28' aufliegt, die wiederum von einer zweiten vom Rohr durchsetzten Kappe 30' überlagert ist, deren Durchmesser größer ist als der Durchmesser der ersten Kappe und die unter Zwischenschaltung eines Dichtungsringes 32' von der Blindkappe 22' gegen die erste Kappe 28' schraubbar ist. Wie bei der Ausführungsform nach Fig. 1 ist der aus der Pflanzschale 57 herausragende Teil 46' des Rohres 59 und die erste Kappe 28' jeweils mit wenigstens einem Schlitz (nicht dargestellt) ausgestattet, die miteinander ausgerichtet sind und durch die die Saugschläuche 8 hindurchgeführt sind, die von der zweiten Kappe 30' überdeckt sind. Das Verbindungsstück 51 ist vorzugsweise als T-Stück ausgebildet.

Die Abdichtung des Rohres 59 im Boden 55 der Pflanzschale 57 kann mit Hilfe einer Verschraubung 69 erfolgen. Die Pflanzschale 57 weist einen mit Löchern 71 versehenen Boden 73 auf, über die überschüssiges Regenwasser ablaufen kann.

Im unteren Ende des Rohres 59 ist ein Sieb 63 angeordnet, um zu verhindern, dass sich die Gewichte am Ende der Schläuche 8 im Verbindungsstück 51 verfangen.

An den Schlauchanschluss 47 kann alternativ oder zusätzlich ein separater Wasser-Einfüllstutzen 65 über einen Verbindungsschlauch 67 angeschlossen werden. Dieser Einfüllstutzen 65 kann beliebiger Stelle, vorzugsweise an einer leicht zugänglichen Stelle, bspw. an einer Steinumrandung 75 oder in einer Ecke einer Grabstelle angeordnet werden.

### Bezugszeichenliste

- 1: Gefäß
- 2: Vorratsbehälter
- 3: Aufsatz
- 4: Rand
- 5: unterer mit Löchern ausgestatteter Umfangsrandbereich
- 6: oberer geschlossener Umfangsrandbereich
- 8: Saugschlauch
- 12: Flüssigkeitsverteiler
- 14: Oberseite des Wasservorratsbehälters
- 16: Boden des Vorratsbehälters
- 17: Ablauf
- 18: Außenwand des Vorratsbehälters
- 20: Wasser-Einfüllstutzen
- 22, 22': Blindkappe
- 24: Füllstandsmessstab
- 26: Stützwulst
- 28, 28': Kappe
- 30, 30': Kappe
- 32, 32': Dichtungsring
- 34: Schlitz
- 36: Schlitz
- 38: Auswölbung
- 40: Gitter
- 42: Gewichte
- 44: Bodenniveau
- 45: herausragendes Teil
- 46, 46': den Aufsatz überragendes Teil
- 47: Schlauchanschluss
- 49: Schlauch
- 50: unterer Teil des Flüssigkeitsbehälters
- 51: Verbindungsstück
- 52: oberer Teil des Flüssigkeitsbehälters
- 53: Ende
- 54: Verschlussmittel
- 55: Boden
- 57: Pflanzschale
- 59: Rohr
- 61: Ende
- 63: Sieb
- 65: Wasser-Einfüllstutzen
- 67: Verbindungsschlauch
- 71: Löcher
- 73: Boden
- 75: Steinumrandung

## Patentansprüche

1. Vorrichtung zur Bewässerung von Bepflanzungen in Behältnissen, **gekennzeichnet durch**
- ein Gefäß (1), bestehend aus einem geschlossenen Vorratsbehälter (2) für Wasser und einem Vorratsbehälter-Aufsatz (3) für Pflanzerde und Pflanzen, und
- wenigstens einen aus dem Vorratsbehälter (2) nach oben aus dem Aufsatz (3) herausgeführten Saugschlauch (8), dessen nach oben herausgeführtes Ende (10) mit einem in die Pflanzerde einsteckbaren Flüssigkeitsverteiler (12) verbindbar ist, **dadurch gekennzeichnet**, dass des Rand (4) des Vorratsbehälter-Aufsatzes (3) einen unteren mit Öffnungen ausgestatteten Umfangswandbereich (5) und einen oberen geschlossenen Umfangswandbereich (6) aufweist.

2. Vorrichtung nach Anspruch 1, **dadurch gekennzeichnet, dass** der geschlossene Wasser-Vorratsbehälter (2) eine zum Rand hin abfallende Oberseite (14) aufweist.

3. Vorrichtung nach Anspruch 1, **dadurch gekennzeichnet, dass** der Wasser- Vorratsbehälter (2) einen gewölbten Boden (16) aufweist.

4. Vorrichtung nach Anspruch 1, **dadurch gekennzeichnet, dass** die Außenwand (18) des Vorratsbehälters (2) sich auswärts nach oben erweiternd ausgebildet ist.

5. Vorrichtung nach Anspruch 1, **dadurch gekennzeichnet, dass** das Gefäß (1) einen Wasser-Einfüllstutzen (20) mit einem aus dem Aufsatz (3) nach oben herausragenden Teil (46) aufweist.

6. Vorrichtung nach Anspruch 5, **dadurch gekennzeichnet, dass** der Einfüllstutzen (20) mit einer aufschraubbaren Blindkappe (22) versehen ist.

7. Vorrichtung nach Anspruch 6, **dadurch gekennzeichnet, dass** ein die Blindkappe (22) durchsetzender Wasser-Füllstandsmessstab (24) oder eine elektromechanische Wasser-Füllstandsanzeige vorgesehen ist.

8. Vorrichtung nach Anspruch 5 oder 6, **dadurch gekennzeichnet, dass** der Einfüllstutzen (20) oberhalb des Aufsatzes (3) außenseitig einen Stützwulst (26) aufweist, auf dem eine erste, vom Einfüllstutzen durchragte Kappe (28) aufliegt, die wiederum von einer zweiten, vom Einfüllstutzen durchsetzten Kappe (30) überlagert ist, deren Durchmesser größer ist als der Durchmesser der ersten Kappe (28) und die unter Zwischenschaltung eines Dichtungsringes (32) von der Blindkappe (22) gegen die erste Kappe (28) schraubbar ist.

9. Vorrichtung nach Anspruch 5, **dadurch gekennzeichnet, dass** der aus dem Aufsatz (3) herausragende Teil (46) des Einfüllstutzens (20) und die erste Kappe (28) jeweils mit wenigstens einem Schlitz (34, 36) ausgestattet sind, die miteinander ausgerichtet sind und durch die die Saugschläuche (8) hindurchgeführt sind, die von der zweiten Kappe (30) überdeckt sind.

10. Vorrichtung nach einem der vorhergehenden Ansprüche, **dadurch gekennzeichnet, dass** das Gefäß (1) unterhalb des unteren Endes des Einfüllstutzens (20) im Boden eine Auswölbung (38) aufweist, die von einem mit Öffnungen versehenen Teil, bspw. einem Gitter (40) abgedeckt ist.

11. Vorrichtung nach einem der vorhergehenden Ansprüche, **dadurch gekennzeichnet, dass** die Saugschläuche (8) an ihrem unteren Ende mit Gewichten (42) versehen sind.

12. Vorrichtung nach Anspruch 11, **dadurch gekennzeichnet, dass** die Gewichte (42) beidendig spitz auslaufend ausgebildet sind.

13. Vorrichtung nach einem der vorhergehenden Ansprüche, **dadurch gekennzeichnet, dass** im Boden (16) des Wasservorratsbehälters (2) ein Schlauchanschluss (47) ausgebildet ist, an den wenigstens ein Schlauch (49) angeschlossen ist, der mit einem eine Pflanzschale (57) abgedichtet durchsetzenden und aus der Pflanzschale nach oben herausgeführten Rohr (59) verbindbar ist, dessen aus der Pflanzschale (57) herausragendes Teil (46') mit einer aufschraubbaren Blindkappe (22') versehen ist.

14. Vorrichtung nach Anspruch 13, **dadurch gekennzeichnet, dass** zur Verbindung ein T-Stück (51) verwendet wird.

15. Vorrichtung nach Anspruch 13, **dadurch gekennzeichnet, dass** das Rohr (59) oberhalb der Pflanzschale (57) einen Stützwulst aufweist, auf dem eine erste, vom Rohr durchragte Kappe (28') aufliegt, die wiederum von einer zweiten vom Rohr durchsetzten Kappe (30') überlagert ist, deren Durchmesser größer ist als der Durchmesser der ersten Kappe und die unter Zwischenschaltung eines Dichtungsringes (32') von der Blindkappe (22') gegen die erste Kappe schraubbar ist.

16. Vorrichtung Anspruch 13 oder 14, **dadurch gekennzeichnet, dass** der aus der Pflanzschale (57) herausragende Teil (46') des Rohres (59) und die erste Kappe (28') jeweils mit wenigstens einem Schlitz ausgestattet sind, die miteinander ausgerichtet sind und durch die die Saugschläuche (8) hindurchgeführt sind, die von der zweiten Kappe (30') überdeckt sind.

17. Vorrichtung nach einem der Ansprüche 13 bis 16, **dadurch gekennzeichnet, dass** an den Schlauchanschluss (47) des Bodens (16) des Wasservorratsgefäßes (2) oder an das T-Stück (51) ein separater Wassereinfüllstutzen (65) über einen Verbindungsschlauch (67) angeschlossen ist.

18. Vorrichtung nach Anspruch 1, **dadurch gekennzeichnet, dass** der Flüssigkeitsverteiler (12) aus einem geschlossenen Hohlkörper mit einem unteren, in die Pflanzerde einsteckbaren Teil (50) und einem oberen, auf dem unteren Teil (50) angeordneten Teil (52) besteht.

19. Vorrichtung nach Anspruch 18, **dadurch gekennzeichnet, dass** der untere Teil (50) aus einem porösen Material, vorzugsweise aus einem Hohlkegel aus Ton besteht.

20. Vorrichtung nach Anspruch 18, **dadurch gekennzeichnet, dass** der obere Teil (52) aus einem luftundurchlässigen Material besteht.

21. Vorrichtung nach Anspruch 20 **dadurch gekennzeichnet, dass** der obere Teil (52) als auf den Ton-Hohlkegel (50) aufgesetzter, luftundurchlässiger Aufsatz oder als luftundurchlässige, zylindrische Fortsetzung des Ton-Hohlkelgels (50) ausgebildet ist.

22. Vorrichtung nach Anspruch 21, **dadurch gekennzeichnet, dass** auf den Aufsatz oder auf die Fortsetzung des Ton-Hohlkegels ein Verschlussmittel (54) anbringbar ist, durch das der Saugschlauch (8) luftdicht abgedichtet und hindurchgeführt ist

23. Vorrichtung nach Anspruch 22, **dadurch gekennzeichnet, dass** das Verschlussmittel (54) eine Kappe, ein Deckel, ein Pfropfen oder dergleichen ist.

## Claims

1. Device for watering plants in containers,
**characterised by**
- a receptacle (1) consisting of a closed storage tank (2) for water and a storage tank attachment (3) for plant soil and plants, and
- at least one suction hose (8) guided out of the storage tank (2) upwards out of the attachment (3), the end (10) thereof guided upwards being able to be connected to a fluid distributor (12) which may be inserted into the plant soil, **characterised in that** the edge (4) of the storage tank attachment (3) comprises a lower peripheral wall region (5) provided with apertures and an upper closed peripheral wall region (6).

2. Device according to Claim 1, **characterised in that** the closed water storage tank (2) comprises an upper face (14) dropping away towards the edge.

3. Device according to Claim 1, **characterised in that** the water storage tank (2) has a curved base (16).

4. Device according to Claim 1, **characterised in that** the outer wall (18) of the storage tank (2) is configured to widen outwardly upwards.

5. Device according to Claim 1, **characterised in that** the receptacle (1) comprises a water filler neck (20) with a part projecting upwards (46) out of the attachment (3).

6. Device according to Claim 5, **characterised in that** the filler neck (20) is provided with a blanking cap (22) which may be screwed on.

7. Device according to Claim 6, **characterised in that** a water filling level measuring stick (24) penetrating the blanking cap (22) or an electromechanical water filling level display is provided.

8. Device according to Claim 5 or 6, **characterised in that** the filler neck (20) has a supporting bead (26) on the outside above the attachment (3), on which a first cap (28) penetrated by the filler neck bears, which in turn is overlaid by a second cap (30) penetrated by the filler neck, the diameter thereof being greater than the diameter of the first cap (28) and which, by the interposition of a sealing ring (32), may be screwed by the blanking cap (22) against the first cap (28).

9. Device according to Claim 5, **characterised in that** the part (46) of the filler neck (20) projecting from the attachment (3) and the first cap (28) are respectively provided with at least one slot (34, 36), which are aligned with one another and through which the suction hoses (8) are guided, which are covered by the second cap (30).

10. Device according to one of the preceding claims, **characterised in that** the receptacle (1) below the lower end of the filler neck (20) has a bulged portion (38) in the base, which is covered by a part provided with apertures, for example a mesh (40).

11. Device according to one of the preceding claims, **characterised in that** the suction hoses (8) are provided at their lower end with weights (42).

12. Device according to Claim 11, **characterised in that** the weights (42) are configured to taper to a point at both ends.

13. Device according to one of the preceding claims, **characterised in that** in the base (16) of the water storage tank (2) a hose connector (47) is configured to which at least one hose (49) is connected, which may be connected to a pipe (59) penetrating a planter (57) in a sealed manner and guided upwards out of the planter, the part (46') thereof projecting out of the planter (57) being provided with a blanking cap (22') which is able to be screwed on.

14. Device according to Claim 13, **characterised in that** a T-piece (51) is used for the connection.

15. Device according to Claim 13, **characterised in that** the pipe (59) has above the planter (57) a supporting bead, on which a first cap (28') penetrated by the pipe bears, which in turn is overlaid by a second cap (30') penetrated by the pipe, the diameter thereof being greater than the diameter of the first cap and which, by the interposition of a sealing ring (32'), may be screwed by the blanking cap (22') against the first cap.

16. Device according to Claim 13 or 14, **characterised in that** the part (46') of the pipe (59) projecting from the planter (57) and the first cap (28') are respectively provided with at least one slot, which are aligned with one another and through which the suction hoses (8) are guided, which are covered by the second cap (30').

17. Device according to one of Claims 13 to 16, **characterised in that** a separate water filler neck (65) is connected to the hose connector (47) of the base (16) of the water storage tank (2) or to the T-piece (51) via a connecting hose (67).

18. Device according to Claim 1, **characterised in that** the fluid distributor (12) consists of a closed hollow body with a lower part (50) able to be inserted into the plant soil and an upper part (52) arranged on the lower part (50).

19. Device according to Claim 18, **characterised in that** the lower part (50) consists of a porous material, preferably consisting of a hollow cone made of clay.

20. Device according to Claim 18, **characterised in that** the upper part (52) consists of an air-impermeable material.

21. Device according to Claim 20, **characterised in that** the upper part (52) is configured as an air-impermeable attachment mounted on the clay hollow cone (50), or as an air-impermeable cylindrical extension of the clay hollow cone (50).

22. Device according to Claim 21, **characterised in that** onto the attachment or onto the extension of the clay hollow cone a closure means (54) may be attached, through which the suction hose (8) is sealed and guided in an airtight manner.

23. Device according to Claim 22, **characterised in that** the closure means (54) is a cap, a lid, a stopper or the like.

## Revendications

1. Dispositif d'arrosage de plantes en conteneurs,
**caractérisé par**
- un conteneur (1), formé par un réservoir d'eau (2) fermé et un élément supérieur (3) pour la terre de plantation et les plantes, et
- au moins un flexible d'aspiration (8), qui est guidé hors du réservoir (2) vers le haut hors de l'élément supérieur (3) et dont l'extrémité supérieure (10) guidée vers le haut peut être reliée à un distributeur de liquide (12), enfichable dans la terre de plantation, **caractérisé en ce que** le bord (4) de l'élément supérieur (3) comporte une zone de paroi périphérique (5) supérieure, munie de trous, et une zone de paroi périphérique (6) inférieure fermée.

2. Dispositif selon la revendication 1, **caractérisé en ce que** le réservoir d'eau (2) fermé comporte un côté supérieur (14) en pente descendante par rapport au bord.

3. Dispositif selon la revendication 1, **caractérisé en ce que** le réservoir d'eau (2) comporte un fond (16) bombé.

4. Dispositif selon la revendication 1, **caractérisé en ce que** la paroi extérieure (18) du réservoir d'eau (2) est réalisée en s'élargissant vers l'extérieur vers le haut.

5. Dispositif selon la revendication 1, **caractérisé en ce que** le conteneur (1) comporte une tubulure de remplissage d'eau (20) avec une partie (46) s'avançant vers le haut hors de l'élément supérieur (3).

6. Dispositif selon la revendication 5, **caractérisé en ce que** la tubulure de remplissage (20) est munie d'un capuchon d'obturation (22) propre à être vissé sur ladite tubulure.

7. Dispositif selon la revendication 6, **caractérisé en ce qu'**il est prévu une jauge de niveau d'eau (24) traversant la tubulure de remplissage (20) ou un afficheur de niveau d'eau électromécanique.

8. Dispositif selon la revendication 5 ou 6, **caractérisé en ce que** la tubulure de remplissage (20) comporte, sur le côté extérieur au-dessus de l'élément supérieur (3), un bourrelet d'appui (26), sur lequel prend appui un premier capuchon (28), qui est traversé par la tubulure de remplissage et sur lequel est posé un deuxième capuchon (30), qui est traversé par la tubulure de remplissage et dont le diamètre est supérieur au diamètre du premier capuchon (28) et qui peut être vissé depuis le capuchon d'obturation (22) contre le premier capuchon (28) en intercalant une bague d'étanchéité (32).

9. Dispositif selon la revendication 5, **caractérisé en ce que** la partie (46) de la tubulure de remplissage (20), qui s'avance hors de l'élément supérieur (3), et le premier capuchon (28) sont munis chacun d'au moins une fente (34, 36), qui sont alignées l'une sur l'autre et à travers lesquelles passent les flexibles d'aspiration (8) qui sont recouverts par le deuxième capuchon (30).

10. Dispositif selon l'une quelconque des revendications précédentes, **caractérisé en ce que** le conteneur (1) comporte dans le fond, en dessous de l'extrémité inférieure de la tubulure de remplissage (20), une concavité (38), qui est recouverte par un élément muni de trous, tel qu'une grille (40).

11. Dispositif selon l'une quelconque des revendications précédentes, **caractérisé en ce que** les flexibles d'aspiration (8) sont munis de poids (42) au niveau de leurs extrémités inférieures.

12. Dispositif selon la revendication 11, **caractérisé en ce que** les poids (42) se terminent en pointe aux deux extrémités.

13. Dispositif selon l'une quelconque des revendications précédentes, **caractérisé en ce que** dans le fond (16) du réservoir d'eau (2) est réalisé un raccord de tuyau (47), auquel peut être raccordé au moins un tuyau flexible (49), qui peut être relié à un tuyau (59), qui traverse de manière étanche une coupe de plantation (57) et est guidé vers le haut hors de ladite coupe de plantation et dont la partie (46') sortant de la coupe de plantation (57) est munie d'un capuchon d'obturation (22') propre à être vissé sur ladite partie.

14. Dispositif selon la revendication 13, **caractérisé en ce qu'**une pièce en T (51) est utilisée pour le raccordement.

15. Dispositif selon la revendication 13, **caractérisé en ce que** le tuyau (59) comporte, au-dessus de la coupe de plantation (57), un bourrelet d'appui, sur lequel prend appui un premier capuchon (28') qui est traversé par le tuyau et sur lequel est posé un deuxième capuchon (30'), qui est traversé par le tuyau et dont le diamètre est supérieur au diamètre du premier capuchon et qui peut être vissé depuis le capuchon d'obturation (22') contre le premier capuchon en intercalant une bague d'étanchéité (32').

16. Dispositif selon la revendication 13 ou 14, **caractérisé en ce que** la partie (46') du tuyau (59), laquelle s'avance hors de la coupe de plantation (57), et le premier capuchon (28') sont munis chacun d'au moins une fente, qui sont alignées l'une sur l'autre et à travers lesquelles passent les flexibles d'aspiration (8) qui sont recouverts par le deuxième capuchon (30').

17. Dispositif selon l'une quelconque des revendications 13 à 16, **caractérisé en ce qu'**une tubulure de remplissage d'eau (65) séparée est raccordée, via un flexible de jonction (67), au raccord de tuyau (47) du fond (16) du réservoir d'eau (2) ou à la pièce en T (51).

18. Dispositif selon la revendication 1, **caractérisé en ce que** le distributeur de liquide (12) est formé par un corps creux fermé avec une partie inférieure (50) enfichable dans la terre de plantation et une partie supérieure (52) disposée sur la partie inférieure (50).

19. Dispositif selon la revendication 18, **caractérisé en ce que** la partie inférieure (50) est formée par un matériau poreux, de préférence par un cône creux en argile.

20. Dispositif selon la revendication 18, **caractérisé en ce que** la partie supérieure (52) est réalisée dans un matériau imperméable à l'air.

21. Dispositif selon la revendication 20, **caractérisé en ce que** la partie supérieure (52) est réalisée sous la forme d'un chapeau imperméable à l'air, posé sur le cône creux (50) en argile ou sous la forme d'un prolongement cylindrique, imperméable à l'air, du cône creux (50) en argile.

22. Dispositif selon la revendication 21, **caractérisé en ce que** sur le chapeau ou le prolongement du cône creux en argile peut être posé un moyen de fermeture (54), à travers lequel le flexible d'aspiration (8) passe de manière étanche à l'air.

23. Dispositif selon la revendication 22, **caractérisé en ce que** le moyen de fermeture (54) est un capuchon, un couvercle, un bouchon ou tout élément similaire.
